# FASCICULE DE BREVET EUROPEEN

(11) **EP 1 006 788 B1**
(45) Date de publication et mention de la délivrance du brevet: **12.02.2003**
(21) Numéro de dépôt: 97947098.6
(22) Date de dépôt: 20.11.1997
(51) Int. Cl.: A01K 15/02, A01K 27/00

(54) **DISPOSITIF POUR L'EDUCATION D'UN ANIMAL TENU EN LAISSE**
TRAININGSVORRICHTUNG FÜR EIN AN EINER LEINE GEHALTENES TIER
DEVICE FOR TRAINING AN ANIMAL ON THE LEASH

(30) Priorité: 21.11.1996 FR 9614716
(43) Date de publication de la demande: 14.06.2000
(73) Titulaire: DYNAVET Société par actions simplifiée, 63000 Clermont-Ferrand (FR)
(72) Inventeur: ANDRE, Max, F-63400 Chamalières (FR); AUBRY, Xavier, F-63400 Chamalières (FR)
(74) Mandataire: Myon, Gérard
(86) Numéro de dépôt international: FR9702088
(87) Numéro de publication internationale: WO98021940

(56) Documents cités:
- FR-A- 2 625 646
- FR-A- 2 700 665
- NL-A- 8 004 998
- US-A- 2 023 950
- US-A- 5 501 179

## Description

L'invention est du domaine des accessoires pour animaux domestiques, et elle a pour objet un dispositif permettant l'éducation d'un animal tenu en laisse.

On connaît divers dispositifs pour sanctionner un animal à distance, par un utilisateur qui juge son comportement fautif.

Parmi ces dispositifs on connaît ceux permettant à un utilisateur d'intervenir lorsqu'il tient l'animal en laisse. Les moyens de sanction sont des moyens punitifs par délivrance d'un choc électrique, par l'intermédiaire de moyens piézo-électriques ou à partir d'une réserve d'énergie tels que décrit dans US2023950 (HICKS). NL8004998 (DINGEMAN) et DE3300486 (KULLMAN), soit des moyens sonores de perturbation modérée, tels que décrit dans FR2700665 (JARDIN).

La mise en oeuvre des moyens de sanction résulte soit d'une traction exercée sur la laisse, tel que décrit dans DE3300486 (KULLMAN) ou FR2700665 (JARDIN), soit encore est commandée directement par l'éducateur à partir de la poignée de la laisse, tel que décrit dans US2023950 (HICKS) et NL 8004998 (DINGEMAN).

La conception des dispositifs pour l'éducation des animaux relève d'une approche pragmatique et d'une analyse de leur impact, en vue d'en déterminer de manière intuitive les modalités de fonctionnement. Dans le cas des dispositifs d'éducation d'un animal tenu en laisse, il est apparu à la Demanderresse, que les difficultés à surmonter résident dans le compromis à trouver entre d'une part l'efficacité de la sanction et sa fiabilité, sans pour autant qu'elle soit perturbatrice outre mesure pour l'animal, et d'autre part une ergonomie visant à rendre son utilisation aisée pour l'éducateur sans accroître l'encombrement hors tout habituel de la laisse avec sa poignée, et visant à permettre à l'utilisateur de santionner volontairement l'animal tout en le maintenant fermement.

Un inconvénient des dispositifs dans lesquels la sanction appliquée est un choc électrique réside dans le fait que la sanction est une punition ; il est apparu à la Demanderesse qu'il était préférable de surprendre le chien par une perturbation modérée de ce qu'il perçoit, tel que par des moyens sonores comme décrit dans FR 2700665 (JARDIN) plutôt que de lui infliger une douleur qui a pour conséquence de le rendre agressif. Par ailleurs, la circulation d'une haute tension dans la laisse n'est pas souhaitable car elle représente un risque en cas de détérioration du cordon de la laisse, qui impliquerait des aménagements spécifiques inoportuns et coûteux.

Le brevet FR 2700665 (JARDIN) propose de commander la sanction, soit par des moyens de type à radiofréquences, soit sous l'effet d'une traction exercée sur la laisse, à la manière de DE 3300486 (KULLMAN).

Un inconvénient majeur d'une commande par radiofréquence réside dans le fait qu'elle ne permet pas conjointement un maintien positif de l'animal, tel qu'au moyen d'une laisse.

L'inconvénient d'une commande sous l'effet d'une traction exercée sur la laisse réside dans le fait que l'usage a montré que la dite commande ne peut pas être directement provoquée par un acte volontaire de l'utilisateur, mais résulte d'une traction exercée par l'animal sur la laisse, ce qui limite à cette action la mise en oeuvre des moyens de sanction.

En conclusion, il est apparu à la Demanderesse qu'aucun des dispositifs existants n'était satisfaisant, en raison des choix faits par les concepteurs de l'art antérieur et des compromis qui en découlent.

On connaît par ailleurs des dispositifs pour sanctionner un chien lorsqu'il aboie, comprenant principalement des moyens de brumisation d'un fluide dont la mise en oeuvre est placée sous la dépendance de moyens de détection des aboiements du chien. On pourra notamment se reporter au brevet FR2625646 (VINCI) qui décrit un dispositif du genre.

Le but de la présente invention est de proposer un dispositif pour l'éducation d'un animal tenu en laisse, dont le mode de sanction soit une perturbation modérée provoquant une simple surprise chez l'animal et ne faisant en aucun cas appel à une source d'énergie électrique haute tension devant être véhiculée dans le cordon de laisse, dont les moyens de commande permettent à l'utilisateur de sanctionner volontairement une action de l'animal tout en le maintenant fermement, et cela d'une part quelle que soit l'action de l'animal et d'autre part sans que l'encombrement du dispositif ait une incidence sur le confort de maintien positif de l'animal par l'utilisateur.

La démarche inventive de la Demanderresse a consisté à choisir une sanction du genre de celle dite à perturbation modérée, par projection d'un fluide, qui peut être commandée volontairement par l'utilisateur à partir de la poignée de laisse, donc à partir d'un moyen de maintien positif de l'animal, par l'intermédiaire de moyens de commande comprenant un bouton de commande localisé dans la poignée de la laisse et une liaison filaire logée dans le cordon de laisse pour relier le bouton de commande à une buse de projection du fluide supportée par l'animal ; le choix de la sanction par projection de fluide est étroitement lié à la possibilité alors offerte, en premier lieu de concevoir des moyens de commande pour lesquels la liaison filaire constitue un vecteur d'agents relativement inoffensifs, notamment électricité basse tension pour l'activation d'une électrovanne associée à la buse de projection, ou encore directement fluide projetté, et en deuxième lieu de disposer la réserve de fluide soit à l'intérieur de la poignée, soit sur le collier de l'animal, pour ne pas accroître l'encombrement global de la laisse.

La présente invention sera mieux comprise et des détails en relevant apparaîtront, à la description qui va en être faite de différents exemples de réalisation, en relation avec les figures de la planche annexée, dans laquelle:
les fig.1 à 4 sont des schémas en perspective illustrant respectivement différentes formes de réalisation de l'invention,
la fig.5 est une illustration en coupe d'un dispositif de l'invention selon la forme de réalisation représentée sur la fig.1.

Sur les figures un dispositif pour l'éducation du comportement d'un animal tenu en laisse est du genre de celui décrit par FR 2700665 (JARDIN), en raison du choix essentiel du mode de sanction du type générant une perturbation modérée de ce que perçoit l'animal. Ce dispositif comprend, outre des moyens de commande de la mise en oeuvre de moyens de sanction, une laisse 14,16,18 pour un maintien positif de l'animal porteur d'un collier 16, ou d'un harnais. La laisse est composée d'une poignée 18 destinée à être maintenue par l'utilisateur, et d'un cordon 14 reliant mécaniquement la poignée 18 et le collier 16.

Selon un aspect général du dispositif relevant de la présente invention, les moyens de sanction sont du type à projection de fluide. Le dispositif comprend une réserve de fluide 2 sous pression, une vanne 4 pour libérer le fluide hors de la dite réserve, une buse 6 de projection du fluide libéré et un organe 8 de commande de l'ouverture de la vanne. Ce dernier 8 est supporté par la poignée 18, tandis que la buse de projection 6 est supportée par le collier 16. Une liaison filaire 10,12 vectrice d'un agent relativement inoffensif, tel que décrit plus loin dans les différentes formes de réalisation de l'invention et notamment de l'électricité basse tension ou un fluide, est logée dans le cordon 14 et relie le dit organe de commande 8 et la buse de projection 6, pour permettre à l'utilisateur qui tient l'animal en laisse de commander la projection du fluide au voisinage de l'animal dont il juge fautive l'action, tout en le maintenant fermement.

Ces dispositions sont telles que les choix de la Demanderesse permettent de répondre l'ensemble des objectifs énoncés pour proposer un dispositif performant, confortable et fiable pour un coût compétitif.

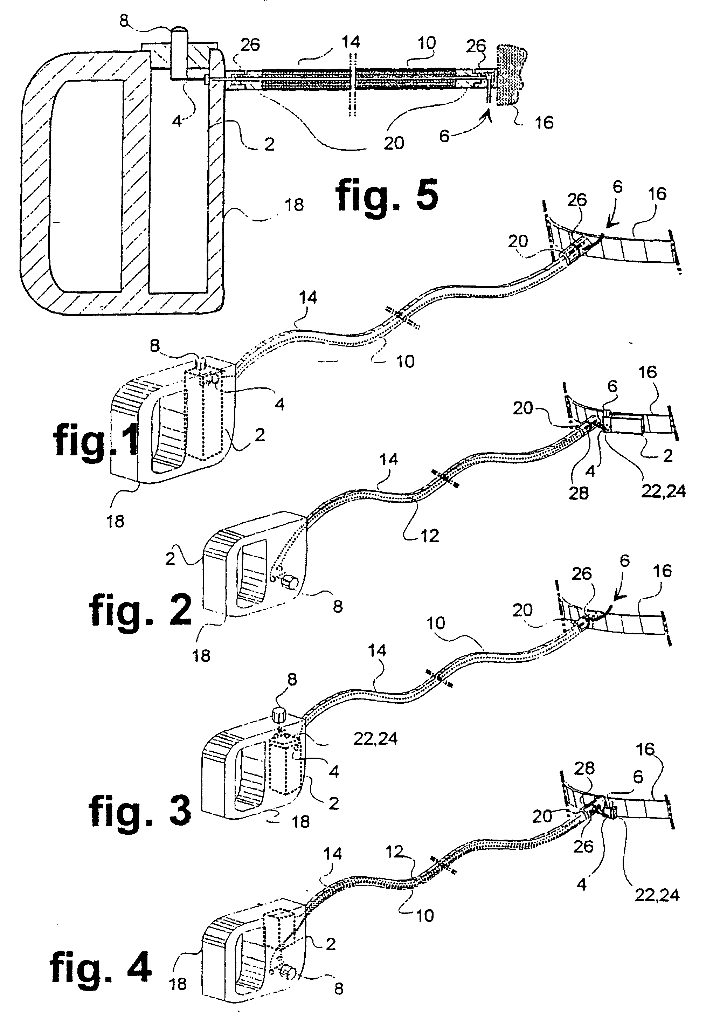

Sur la fig.1, la réserve de fluide 2 et la vanne 4 sont logées dans la poignée 18. L'organe de commande 8 est constitué par un bouton de manoeuvre de la vanne 4. La dite liaison filaire est constituée par un canal 10 communiquant avec la vanne 4 et débouchant hors du cordon 14 au voisinage de moyens de fixation 20 de ce dernier 14 au collier 16 de l'animal, l'orifice distal du canal 10 consitutant avantageusement lui-même la buse de projection 6.

Sur les fig.2, 3 et 4, la vanne 4 est une électrovanne comprenant une réserve d'énergie électrique basse tension 22 et un électro-aimant 24 pour la manoeuvre de la vanne 4.

Sur la fig.2, la réserve de fluide 2, la buse 6 et l'électrovanne 4, 22, 24 sont supportées par le collier 16. L'organe de commande 8 est constitué par un interrupteur de fermeture du circuit de l'électro-aimant 24. La liaison filaire est constituée par une liaison bifilaire électrique 12 d'un signal de commande électrique basse tension.

Sur la fig.3, la réserve de fluide 2 et l'électrovanne 4,22,24 sont supportées par la poignée 18. L'organe de commande 8 est constitué par un interrupteur de fermeture du circuit de l'électro-aimant 24. La liaison filaire est constituée par un canal 10 communiquant avec la vanne 4, et débouchant hors du cordon 14 au voisinage de moyens de fixation 20 du cordon 14 au collier 16 de l'animal, l'orifice distal du canal 10 consitutant avantageusement lui-même la buse de projection 6.

Sur la fig.4, la buse 6 et l'électrovanne 4,24,22 sont supportées par le collier 16 de l'animal, tandis que la réserve de fluide 2 est supportée par la poignée 18. L'organe de commande 8 est constitué par un interrupteur de fermeture du circuit de l'électro-aimant 24. La liaison filaire est constituée d'une part d'un canal 10 interposé entre la réserve de fluide 2 et la vanne 4, et d'autre part d'une liaison bifilaire électrique 12 d'un signal de commande électrique basse tension reliant l'interrupteur 8 à l'électro-aimant 24.

On notera que pour éviter un entortillement de la liaison filaire 10,12, et plus particulièrement un entortillement du canal 10 préjudiciable à la libre circulation du fluide:
1.- Les dispositifs schématisés sur les fig.1 et 3 comportent un canal 10 fixé à la poignée 18 par l'intermédiaire d'un raccord pneumatique tournant 26, le cordon 14, quant à lui, étant fixé au collier 16 de l'animal et à la poignée 18 par l'intermédiaire d'émerillons 20, émerillons 20 et raccord pneumatique tournant 26 de l'extrémité proximale du cordon 14 étant coaxiaux.
2.- Le dispositif schématisé sur la fig.2, comporte une liaison bifilaire électrique 12 reliée à la poignée 18 et au collier 16 par l'intermédiaire de contacts électriques tournants 28, le cordon 14 quant à lui étant fixé au collier 16 de l'animal et à la poignée 18 par l'intermédiaire d'émerillons 20, émerillons 20 et contacts électriques tournants 28 étant coaxiaux.
3.- Le dispositif schématisé sur la fig.4, comporte une liaison bifilaire électrique 12 reliée à la poignée 18 et au collier 16 par l'intermédiaire de contacts électriques tournants 28, et un canal pneumatique 10 relié au collier 16 et à la poignée 18 par l'intermédiaire de raccords pneumatiques tournants 26, le cordon 14 quant à lui étant fixé au collier 16 de l'animal et à la poignée 18 par l'intermédiaire d'émerillons 20, émerillons 20, contacts électriques tournants 28, et raccords pneumatiques tournants 26 étant coaxiaux.

On comprendra que d'une manière générale, un cordon de laisse 14 relevant aussi de la présente invention est caractérisé:
a) en ce qu'il incorpore une liaison filaire constituée par l'un quelconque au moins des éléments du groupe d'éléments comprenant un canal 10 et une liaison bifilaire électrique 12,
b) en ce qu'il est équipé à chacune de ses extrémités d'un émerillon 20 pour respectivement sa fixation à une poignée 18 et à un collier 16,
c) en ce qu'il est équipé à l'une quelconque au moins de ses extrémités de l'un quelconque au moins des éléments du groupe d'éléments comprenant une fiche électrique tournante 28 et un raccord pneumatique tournant 26, pour la connection respective de la liaison bifilaire électrique 12 et du canal 10, respectivement à la poignée 18 et à un collier 16, émerillons 20, fiches électriques 28 et raccord pneumatiques 26 étant coaxiaux aux extrémités respectives du cordon 14.

Le cordon de laisse 14 susvisé, pris indépendamment, présente l'avantage d'être remplacé après usure, ou de permettre à un utilisateur de choisir un cordon de laisse 14, une poignée 18 et un collier 16 en boutique, parmi une pluralités d'entre eux de modèles différents.

Sur les fig.1 et 3, le cordon 14 est principalement formé d'un conduit réalisé par extrusion et revêtu d'une armature, l'évidement du conduit formant le dit canal 10.

Selon d'autres formes de réalisation de cordon 14:
1.- soit le cordon de laisse 14 est principalement constitué d'un conduit logeant coaxialement un autre conduit formant le canal 10. Les deux conduits sont de préférence en contact glissant ou conjointement réalisés par extrusion, ou encore un espace est ménagé entre les deux conduits pour permettre le passage de la liaison bifilaire électrique, ou encore enfin le conduit formant le cordon est revêtu d'une armature incorporant la liaison bifilaire électrique,
2.- soit le canal 10 est formé par un conduit logé dans un cordon de laisse 14 réalisé par tissage, la liaison bifilaire électrique étant logée dans le, ou étant participante du, tissage du cordon 14.

On notera que d'une manière générale, l'effort de traction de l'animal sur la laisse 14 n'est en aucun cas supporté par la liaison filaire 10 et/ou 12, mais par la matière constitutive de tout ou partie du cordon 14, et notamment par l'armature dont il est préférentiellement revêtu, de telle sorte que le maintien positif de l'animal par l'utilisateur ne puisse altérer la liaison filaire 10,12 sous l'effet des efforts de traction exercés sur la laisse.

Par exemple, le module d'élasticité du cordon 14 est supérieur à celui de la liaison filaire 10, 12. Par exemple encore, le cordon de laisse 14 incorpore des fils ou câbles supportant les efforts de traction entre la poignée 18 et le collier 16. Par exemple enfin, le cordon 14 est du type "sangle" avec fils de chaîne et fils de trame, et la liaison filaire 12 constitue certains fils de chaîne.

on remarquera enfin que sans déroger à la règle générale de l'invention, et selon une forme de réalisation visant à exploiter la projection de fluide, non pas pour un effet de brumisation mais pour produire un effet sonore perturbateur pour l'animal, la buse 6 est équipée d'un sifflet générateur de sons à partir du fluide en provenance de la réserve 2.

On notera enfin que la réserve de fluide 2, soit est avantageusement constituée d'une cartouche amovible qui peut être remplacée après avoir été vidée de son contenu, soit est une réserve rechargeable.

## Revendications

1. Dispositif pour l'éducation du comportement d'un animal tenu en laisse, du genre de dispositif comprenant une laisse (14,16,18) pour un maintien positif de l'animal porteur d'un collier (16) ou d'un harnais, la laisse étant composée d'une poignée (18) destinée à être maintenue par l'utilisateur, et d'un cordon (14) reliant mécaniquement la poignée (18) et le harnais (16), le dit dispositif comprenant en outre des moyens de sanction du type générant une perturbation modérée de ce que perçoit l'animal et des moyens de commande de la mise en oeuvre des moyens de sanction, **caractérisé:**
**en ce que** les moyens de sanction étant du type à projection de fluide, le dispositif comprend une réserve de fluide (2) sous pression, une vanne (4) pour libérer le fluide hors de la dite réserve, une buse (6) de projection du fluide libéré et un organe (8) de commande de l'ouverture de la vanne, ce dernier (8) étant supporté par la poignée (18), tandis que la buse de projection (6) est supportée par le collier (16), une liaison filaire (10,12), logée dans le cordon (14) reliant le dit organe de commande (8) et la buse de projection (6), pour permettre à l'utilisateur qui tient l'animal en laisse de commander la projection du fluide au voisinage de l'animal dont il juge fautive l'action, tout en le maintenant fermement;

2. Dispositif selon la revendication 1, **caractérisé**
**en ce que** la réserve de fluide (2) et la vanne (4) sont logées dans la poignée (18), le dit organe de commande (8) étant constitué par un bouton de manoeuvre de la vanne (4), et
**en ce que** la dite liaison filaire est constituée par un canal (10) communiquant avec la vanne (4) et débouchant hors du cordon (14) au voisinage de moyens de fixation (20) de ce dernier (14) au collier (16) de l'animal;

3. Dispositif selon la revendication 1, **caractérisé**
**en ce que** la vanne est une électrovanne comprenant une réserve d'énergie électrique basse tension (22) et un électro-aimant (24) pour la manoeuvre de la vanne (4);

4. Dispositif selon la revendication 3, **caractérisé**
**en ce que** la réserve de fluide (2), la buse (6) et l'électrovanne (4,22,24) sont supportées par le collier (16), l'organe de commande (8) étant constitué par un interrupteur de fermeture du circuit de l'électro-aimant (24), et
**en ce que** la dite liaison filaire est constituée par une liaison bifilaire électrique (12) d'un signal de commande électrique basse tension;

5. Dispositif selon la revendication 4, **caractérisé**
**en ce que** la réserve de fluide (2) et l'électrovanne (4,22,24) sont supportées par la poignée (18), l'organe de commande (8) étant constitué par un interrupteur de fermeture du circuit de l'électro-aimant (24), et
**en ce que** la liaison filaire est constituée par un canal (10) communiquant avec la vanne et débouchant hors du cordon (14) au voisinage de moyens de fixation (20) du cordon (14) au collier (16) de l'animal ;

6. Dispositif selon la revendication 3, **caractérisé**
**en ce que** la buse (6) et l'électrovanne (4,22,24), sont supportées par le collier (16) de l'animal, tandis que la réserve de fluide (2) est supportée par la poignée (18), l'organe de commande (8) étant constitué par un interrupteur de fermeture du circuit de l'électro-aimant (24), et
**en ce que** la liaison filaire est constituée d'une part d'un canal (10) interposé entre la réserve de fluide (2) et la vanne (4), et d'autre part d'une liaison bifilaire électrique (12) d'un signal de commande électrique basse tension reliant l'interrupteur (8) à l'électro-aimant (24);

7. Dispositif selon les revendications 2 et 5, **caractérisé:**
**en ce que** le canal (10) est fixé à la poignée (18) par l'intermédiaire d'un raccord pneumatique tournant (26), et
**en ce que** le cordon (14) est fixé au collier (16) de l'animal et à la poignée (18) par l'intermédiaire d'émerillons (20);

8. Dispositif selon l'une quelconque des revendications 4 et 6, **caractérisé:**
**en ce que** la liaison bifilaire électrique (12) est reliée à la poignée (18) et au collier (14) par l'intermédiaire de contacts électriques tournants (28), et
**en ce que** le cordon (14) est fixée au collier (16) de l'animal et à la poignée (18) par l'intermédiaire d'émerillons (20) ;

9. Dispositif selon les revendications 6 et 8, **caractérisé:**
**en ce que** le canal (10) est fixé à la poignée (18) et au collier (16) par l'intermédiaire de raccords pneumatiques tournants (26);

10. Dispositif selon l'une quelconque des revendications 2 et 5, **caractérisé:**
**en ce que** le cordon (14) est principalement formé d'un conduit réalisé par extrusion et revêtu d'une armature, l'évidement du conduit formant le dit canal (10) ;

11. Dispositif selon l'une quelconque des revendications 2,5 et 6, **caractérisé:**
**en ce que** le canal (10) est formé par un conduit logé dans le cordon (14) réalisé par tissage;

12. Dispositif selon l'une quelconque des revendications 2,5 et 6, **caractérisé:**
**en ce que** le cordon (14) est principalement constitué d'un conduit logeant coaxialement un autre conduit formant le canal (10);

13. Dispositif selon l'une quelconque des revendications précédentes, **caractérisé:**
**en ce que** le module d'élasticité du cordon (14) est supérieur à celui de la liaison filaire (10,12),
de telle sorte que le maintien positif de l'animal par l'utilisateur ne puisse altérer la liaison filaire (10,12) sous l'effet des efforts de traction exercés sur la laisse;

14. Dispositif selon l'une quelconque des revendications précédentes, **caractérisé:**
**en ce que** le cordon (14) incorpore des fils supportant les efforts de traction entre la poignée (18) et le collier (16);

15. Dispositif selon l'une quelconque des revendications précédentes, le cordon (14) étant du type "sangle" avec fils de chaîne et fils de trame, **caractérisé;**
**en ce que** la liaison filaire (12) constitue certains fils de chaîne;

16. Cordon de laisse (14) destiné à équiper un dispositif selon la revendication 1, **caractérisée:**
**en ce qu'**il incorpore une liaison filaire constituée par l'un quelconque au moins des éléments du groupe d'éléments comprenant un canal (10) et une liaison bifilaire électrique (12),
**en ce qu'**il est équipé à chacune de ses extrémités d'un émerillon (20) pour respectivement sa fixation à une poignée (18) et à un collier (16), et
**en ce qu'**il est équipé à l'une quelconque au moins de ses extrémités de l'un quelconque au moins des éléments du groupe d'éléments comprenant une fiche électrique tournante (28) et un raccord pneumatique tournant (26), pour la connection respective de la liaison bifilaire électrique (12) et du canal (10) à respectivement une poignée (18) et à un collier (16), emerillons (20), fiches électriques (28) et raccords pneumatiques (26) étant coaxiaux aux extrémités respectives du cordon (14).

## Patentansprüche

1. Vorrichtung für die Korrektur des Verhaltens eines an einer Leine geführten Tieres, wobei diese Vorrichtung von der Art von Vorrichtungen ist, welche eine Leine (14, 16, 18) für das positive Führen des Tieres, das ein Halsband (16) oder ein Geschirr trägt, enthalten, wobei die Leine aus einem Handgriff (18), der dazu bestimmt ist, vom Nutzer gehalten zu werden, und einem Strick (14), der den Handgriff (18) und das Geschirr (16) mechanisch verbindet, besteht, wobei die besagte Vorrichtung außerdem Züchtigungsmittel von dem Typ, der eine gemäßigte Störung dessen, was das Tier wahrnimmt, erzeugt, und Mittel für die Steuerung der Anwendung der Züchtigungsmittel umfasst, **dadurch gekennzeichnet,**
**dass** die Züchtigungsmittel vom Typ des Versprühens eines Mediums sind, wobei die Vorrichtung die folgenden Teile umfasst: einen Vorratsbehälter an unter Druck stehendem Medium (2); ein Ventil (4) zur Freisetzung des Mediums aus dem besagten Vorratsbehälter; eine Düse (6) zum Versprühen des freigesetzten Mediums und ein Steuerorgan (8) für das Öffnen des Ventils, wobei sich dieses Letztere (8) am Handgriff (18) befindet, während die Sprühdüse (6) am Halsband (16) getragen wird; eine Drahtverbindung (10, 12), die im Strick (14) untergebracht ist, der das besagte Steuerorgan (8) und die Sprühdüse (6) verbindet, um dem Nutzer, der das Tier an der Leine hält, zu ermöglichen, das Versprühen des Mediums in der Nähe des Tieres, dessen Verhalten er als fehlerhaft bewertet, zu steuern, indem er es straff hält.

2. Vorrichtung nach Anspruch 1, **dadurch gekennzeichnet,**
**dass** der Vorratsbehälter für das Medium (2) und das Ventil (4) im Handgriff (18) untergebracht sind, wobei das besagte Steuerorgan (8) durch einen Betätigungsknopf für das Ventil (4) gebildet wird, und
**dass** die besage Drahtverbindung aus einem Kanal (10) gebildet wird, der mit dem Ventil (4) in Verbindung steht und außerhalb des Stricks (14) in der Nähe der Befestigungsmittel (20) dieses Letzteren (14) am Halsband (16) des Tieres mündet.

3. Vorrichtung nach Anspruch 1, **dadurch gekennzeichnet,**
**dass** das Ventil ein Magnetventil ist, welches einen Vorrat an elektrischer Energie niedriger Spannung (22) und einen Elektromagneten (42) für die Betätigung des Ventils (4) aufweist.

4. Vorrichtung nach Anspruch 3, **dadurch gekennzeichnet,**
**dass** der Vorratsbehälter für das Medium (2), die Düse (6) und das Magnetventil (4, 22, 24) am Halsband (16) getragen werden, wobei das Steuerorgan (8) durch einen Schalter zum Schließen des Stromkreises für den Elektromagneten (24) gebildet wird, und
**dass** die besagte Drahtverbindung aus einer zweiadrigen elektrischen Verbindung (12) für ein elektrisches Steuersignal niedriger Spannung besteht.

5. Vorrichtung nach Anspruch 4, **dadurch gekennzeichnet,**
**dass** der Vorratsbehälter für das Medium (2) und das Magnetventil (4, 22, 24) sich am Handgriff (18) befinden, wobei das Steuerorgan (8) durch einen Schalter zum Schließen des Stromkreises für den Elektromagneten (24) gebildet wird, und
**dass** die besagte Drahtverbindung aus einem Kanal (10) gebildet wird, der mit dem Ventil in Verbindung steht und außerhalb des Strickes (14) in der Nähe der Befestigungsmittel (20) des Stricks (14) am Halsband (16) des Tieres mündet.

6. Vorrichtung nach Anspruch 3, **dadurch gekennzeichnet,**
**dass** die Düse (6) und das Magnetventil (4, 22, 24) am Halsband (16) des Tieres getragen werden, während sich der Vorratsbehälter für das Medium (2) am Handgriff (18) befindet, wobei das Steuerorgan (8) durch einen Schalter zum Schließen des Stromkreises für den Elektromagneten (24) gebildet wird, und
**dass** die besagte Drahtverbindung einerseits aus einem Kanal zwischen dem Vorratsbehälter für das Medium (2) und dem Ventil (4) und andererseits aus einer zweiadrigen elektrischen Verbindung (12) für ein elektrisches Steuersignal niedriger Spannung besteht, welche den Schalter (8) mit dem Elektromagneten (24) verbindet.

7. Vorrichtung nach den Ansprüchen 2 und 5, **dadurch gekennzeichnet,**
**dass** der Kanal (10) am Handgriff (18) mit Hilfe eines drehbaren pneumatischen Anschlussstückes (26) befestigt ist, und
**dass** der Strick (14) am Halsband (16) des Tieres und am Handgriff (18) mit Hilfe von Drehringen (20) befestigt ist.

8. Vorrichtung nach einem beliebigen der Ansprüche 4 und 6, **dadurch gekennzeichnet,**
**dass** die zweiadrige elektrische Verbindung (12) mit dem Handgriff (18) und dem Halsband (*16*) über elektrische Drehkontakte (28) verbunden ist, und
**dass** der Strick (14) am Halsband (16) des Tieres und am Handgriff (18) über Drehringe (20) befestigt ist.

9. Vorrichtung nach den Ansprüchen 6 und 8, **dadurch gekennzeichnet,**
**dass** der Kanal (10) am Handgriff (18) und am Halsband (16) über drehbare pneumatische Anschlussstücke (26) befestigt ist.

10. Vorrichtung nach einem beliebigen der Ansprüche 2 und 5, **dadurch gekennzeichnet,**
**dass** der Strick (14) grundsätzlich aus einer Rohrleitung gebildet wird, die durch Strangpressen erzeugt worden ist und die mit einer Ummantelung umgeben ist, wobei der Hohlraum der Rohrleitung den besagten Kanal (10) bildet.

11. Vorrichtung nach einem beliebigen der Ansprüche 2, 5 und 6, **dadurch gekennzeichnet,**
**dass** der Kanal (10) aus einer Leitung gebildet wird, die sich im durch Webverfahren gefertigten Strick (14) befindet.

12. Vorrichtung nach einem beliebigen der Ansprüche 2, 5 und 6, **dadurch gekennzeichnet,**
**dass** der Strick (14) grundsätzlich aus einer Rohrleitung gebildet wird, in welcher sich koaxial eine andere Rohrleitung befindet, welche den Kanal (10) bildet.

13. Vorrichtung nach einem beliebigen der vorangegangenen Ansprüche, **dadurch gekennzeichnet,**
**dass** der Elastizitätsmodul des Stricks (14) größer als derjenige der Drahtverbindung (10, 12) ist
dergestalt, dass das positive Führen des Tieres durch den Nutzer nicht die Drahtverbindung (10, 12) unter der Wirkung der auf die Leine ausgeübten Zugbelastungen verändern kann.

14. Vorrichtung nach einem beliebigen der vorangegangenen Ansprüche, **dadurch gekennzeichnet,**
**dass** in den Strick (14) *Fäden* eingelagert sind, die den Zugbelastungen zwischen dem Handgriff (18) und dem Halsband (16) standhalten.

15. Vorrichtung nach einem beliebigen der vorangegangenen Ansprüche, wobei der Strick (14) vom Typ,Tragriemen' mit Kettfäden und Schussfäden ist, **dadurch gekennzeichnet,**
**dass** die Drahtverbindung (12) bestimmte Kettfäden bildet.

16. Leinestrick (14), der dazu bestimmt ist, eine Vorrichtung nach Ansprich 1 auszustatten, **dadurch gekennzeichnet,**
**dass** in ihn eine Drahtverbindung eingelagert ist, die aus mindestens einem beliebigen Element aus der Gruppe von Elementen besteht, die einen Kanal (10) und eine zweiadrige elektrische Verbindung (12) umfasst,
**dass** er an jedem seiner Enden mit einem Drehring (20) ausgestattet ist, so dass er damit an einem Handgriff (18) bzw. an einem Halsband (16) befestigt werden kann, und
**dass** er an mindestens einem seiner Enden mit mindestens einem der Elemente aus der Gruppe von Elementen ausgestattet ist, die einen drehbaren elektrischen Stecker (28) und ein drehbares pneumatischen Anschlussstück (26) umfassen, für den Anschluss der zweiadrigen elektrischen Verbindung (12) bzw. des Kanals (10) an einen Handgriff (18) bzw. an ein Halsband (16), wobei die Drehringe (20), die elektrischen Stecker (28) und die pneumatischen Anschlusssstücke (26) an den jeweiligen Enden des Stricks (14) koaxial sind.

## Claims

1. Device for training the behaviour of an animal held on a leash, the device being of the type comprising a leash (14, 16, 18) for the positive restraint of the animal wearing a collar (16) or a harness, the leash consisting of a handle (18) designed to be held by the user and a line (14) mechanically connecting the handle (18) to the harness (16), the said device additionally comprising deterrent means of the type generating a moderate disturbance of the animal's perception and means of controlling the activation of the deterrent means, **characterized in that** the deterrent means are of the fluid spray type and the device comprises a reservoir of pressurized fluid (2), a valve (4) for releasing the fluid outside the said reservoir, a nozzle (6) for spraying the released fluid and a member (8) for controlling the opening of the valve, this member (8) being carried by the handle (18), while the spray nozzle (6) is carried by the collar (16), a connecting cord (10, 12) housed in the line (14) connecting the said control member (8) to the spray nozzle (6), to enable the user, when holding the animal on the leash, to cause the fluid to be sprayed into the vicinity of the animal when he considers its behaviour to be incorrect, while firmly restraining the animal.

2. Device according to Claim 1, **characterized in that** the fluid reservoir (2) and the valve (4) are housed in the handle (18), the said control member (8) consisting of a button operating the valve (4), and **in that** the said connecting cord consists of a channel (10) communicating with the valve (4) and opening outside the line (14) in the vicinity of means (20) for fixing the said line (14) to the animal's collar (16).

3. Device according to Claim 1, **characterized in that** the valve is a solenoid valve comprising a store of low-voltage electrical energy (22) and an electromagnet (24) for operating the valve (4).

4. Device according to Claim 3, **characterized in that** the fluid reservoir (2), the nozzle (6) and the solenoid valve (4, 22, 24) are mounted on the collar (16), the control member (8) consisting of a switch for closing the circuit of the electromagnet (24), and **in that** the said connecting cord consists of an electrical two-wire link (12) for a low-voltage electrical control signal.

5. Device according to Claim 4, **characterized in that** the fluid reservoir (2) and the solenoid valve (4, 22, 24) are mounted on the handle (18), the control member (8) consisting of a switch for closing the circuit of the electromagnet (24), and **in that** the connecting cord. consists of a channel (10) communicating with the valve and opening outside the line (14) in the vicinity of means (20) for fixing the line (14) to the animal's collar (16).

6. Device according to Claim 3, **characterized in that** the nozzle (6) and the solenoid valve (4, 22, 24) are mounted on the animal's collar (16), while the fluid reservoir (2) is mounted on the handle (18), the control member (8) consisting of a switch for closing the circuit of the electromagnet (24), and **in that** the connecting cord consists of, on the one hand, a channel (10) interposed between the fluid reservoir (2) and the valve (4) and, on the other hand, an electrical two-wire link (12) for a low-voltage electrical control signal connecting the switch (8) to the electromagnet (24).

7. Device according to Claims 2 and 5, **characterized in that** the channel (10) is fixed to the handle (18) by means of a rotating pneumatic connection (26), and **in that** the line (14) is fixed to the animal's collar (16) and to the handle (18) by means of swivels (20).

8. Device according to any one of Claims 4 and 6, **characterized in that** the electrical two-wire link (12) is connected to the handle (18) and to the collar (14) by means of rotating electrical contacts (28), and **in that** the line (14) is fixed to the animal's collar (16) and to the handle (18) by means of swivels (20).

9. Device according to Claims 6 and 8, **characterized in that** the channel (10) is fixed to the handle (18) and to the collar (16) by means of rotating pneumatic connections (26).

10. Device according to any one of Claims 2 and 5, **characterized in that** the line (14) is principally formed from a duct made by extrusion and covered with a reinforcement, the hollowing out of the duct forming the said channel (10).

11. Device according to any one of Claims 2, 5 and 6, **characterized in that** the channel (10) is formed from a duct housed in the line (14) which is made by weaving.

12. Device according to any one of Claims 2, 5 and 6, **characterized in that** the line (14) principally consists of a duct which coaxially houses another duct forming the channel (10).

13. Device according to any one of the preceding claims, **characterized in that** the modulus of elasticity of the line (14) is greater than that of the connecting cord (10, 12), in such a way that the positive restraint of the animal by the user cannot adversely affect the connecting cord (10, 12) as a result of the tensile stresses applied to the leash.

14. Device according to any one of the preceding claims, **characterized in that** the line (14) incorporates wires to withstand the tensile stresses between the handle (18) and the collar (16).

15. Device according to any one of the preceding claims, the line (14) being of the "strap" type with warp threads and weft threads, **characterized in that** the connecting cord (12) constitutes certain warp threads.

16. Leash line (14) for use with a device according to Claim 1, **characterized in that** it incorporates a connecting cord consisting of at least any one of the elements of the group of elements comprising a channel (10) and an electrical two-wire link (12), **in that** it is provided at each of its ends with a swivel (20) for its fixing, in one case, to a handle (18), and, in the other case, to a collar (16), and **in that** it is provided at least at one of its ends with at least any one of the elements of the group of elements comprising a rotating electrical plug (28) and a rotating pneumatic connection (26), for connecting, respectively, the electrical two-wire link (12) and the channel (10) to a handle (18) and to a collar (16) respectively, the swivels (20), electrical plugs (28) and pneumatic connections (26) being coaxial with the corresponding ends of the line (14).
